# DEMANDE DE BREVET EUROPEEN

(11) **EP 3 182 374 A1**
(43) Date de publication de la demande: **21.06.2017**
(21) Numéro de dépôt: 16204791.4
(22) Date de dépôt: 16.12.2016
(51) Int. Cl.: G06T 7/73, G06T 7/55, B25J 9/16

(54) **PROCÉDÉ ROBOTISÉ DE MESURE D'OPTIQUE TRIDIMENSIONNELLE**

(30) Priorité: 16.12.2015 FR 1562527
(71) Demandeur: Airbus Group SAS, 31700 Blagnac (FR)
(72) Inventeur: DOUILLY, Marc, 80300 ALBERT (FR); RABATE, Patrice, 44800 SAINT HERBLAIN (FR)
(74) Mandataire: Ipside

(57) **Abrégé**

L'invention concerne un procédé (10) de guidage d'un effecteur (305) rapporté à l'extrémité d'un bras articulé (310), apte à réaliser au moins une opération d'assemblage sur une surface (300), au moyen d'un dispositif (30) comportant au moins une caméra (315), la surface (300) comportant une pluralité d'éléments (390) assemblés préalablement à des coordonnées prédéterminés dites théoriques, qui comporte les étapes suivantes :
- capture (110) d'au moins quatre images par la caméra (315) selon quatre angles distincts pour au moins un élément (390),
- détection (120) par traitement d'image de chaque élément (390) sur chaque image,
- calcul (130) par triangulation des coordonnées tridimensionnelles dites mesurées d'un élément (390),

L'invention concerne également un dispositif (30) de guidage d'un effecteur configuré pour mettre en oeuvre le procédé selon le procédé objet de l'invention.

## Description

### DOMAINE TECHNIQUE DE L'INVENTION

La présente invention vise un dispositif et un procédé de guidage d'un outil porté à l'extrémité d'un bras articulé et apte à réaliser au moins une opération de montage sur une surface.

La présente invention trouve une application particulièrement avantageuse dans le guidage d'opérations d'assemblage telles que le perçage et le rivetage.

### ÉTAT DE LA TECHNIQUE

De nombreuses opérations en industrie nécessitent de connaître la géométrie d'une pièce. Les coordonnées relevées de la pièce sont utilisées en vue d'une métrologie dimensionnelle, d'une opération de positionnement d'un robot de montage ou de recalage par rapport à une position ou une trajectoire prédéterminée.

En particulier, le mode d'assemblage en aéronautique est généralement effectué par rivetage et décomposé en deux phases : une phase de pré-assemblage et une phase d'assemblage. Lors de la phase de pré-assemblage, un ensemble de rivets de pré-assemblage sont montés selon des coordonnées de référence. Dans le cas de l'assemblage de pièces entre elles, au moins deux pièces de structure sont mises en position l'une par rapport à l'autre et les rivets de pré-assemblage permettent de les maintenir en position.

Ensuite, la phase d'assemblage implique un ensemble d'étapes de montage en fonction de la position des éléments pré-assemblés. Il pourra par exemple s'agir de réaliser une opération de perçage à une distance et selon un angle prédéterminé par rapport à un rivet pré-assemblé ou encore de réaliser une pluralité d'opérations de rivetage espacées uniformément selon une ligne droite entre deux rivets pré-assemblés.

Dans le cas où les opérations de la phase d'assemblage sont faites manuellement, des témoins représentants les trous à percer sont positionnés entre les rivets de pré-assemblage.

Dans le cas où les opérations d'assemblage sont effectuées à l'aide d'une machine dont les déplacements en position et en orientation sont pilotés, alors celle-ci a besoin de déterminer la position des rivets de pré-assemblage pour recaler par le calcul la position des trous à percer pour l'assemblage. Des robots sont utilisés pour ces opérations successives de visée en trois dimensions, puis de perçage.

Il est connu de l'art antérieur d'utiliser les méthodes usuelles de construction utilisant un repère de référence et un repère pièce. Ces solutions mettent en jeu un outil embarqué sur le robot qui se déplace devant chaque rivet et, par pointage, permet de définir sa position en trois dimensions dans le repère du robot.

Il est connu de l'art antérieur de mettre en oeuvre la vision couplée à un télémètre. Cette solution remplace le pointage mécanique par un pointage optique local rivet par rivet. Cette méthode est très locale et simple à mettre en oeuvre car les rivets balises de référence sont vus comme des cercles, mais elle présente toutefois des inconvénients majeurs en termes de temps de cycle et d'erreurs lors de la visée.

Dans les procédés connus de l'art antérieur, les opérations de recalage s'effectuent par zones de 250mm par 250mm environ. Ainsi, sur un élément de structure avion, une décomposition en de multiples zones de références avec chacune au moins trois points est réalisée. Ce procédé est rendu très long par la multiplicité des déplacements au plus proche de la structure en vitesse contrôlée afin de parcourir toutes ces zones de référence.

L'opération de recalage est donc très longue, de l'ordre de vingt-cinq pourcents du temps d'assemblage. Dans les procédés de l'art antérieur, l'opération de recalage présente des problèmes de qualité résultant en particulier des mauvais positionnements de rivets de pré-assemblage. Enfin l'opération de recalage nécessite un grand nombre de points de référence.

De tels procédés de l'art antérieurs sont décrits en particuliers dans le brevet européen N° EP 1 996 377 B1, dans le brevet américain N° US 5 482 409 et dans le brevet japonais N° JP 3186797 B2. En outre, l'art antérieur connait les procédés décrits dans la demande internationale N° WO 2014210419 A2 et dans le brevet américain N° US 5 506 682.

Aucun des systèmes actuels ne permet de répondre simultanément à tous les besoins requis, à savoir de reconstruire la position d'un ensemble d'élément de pré-assemblage rapidement et en mettant en oeuvre moins de points de référence.

### OBJET DE L'INVENTION

La présente invention vise à remédier à tout ou partie de ces inconvénients.

Selon un premier aspect, l'invention vise un procédé de guidage d'un effecteur situé à l'extrémité d'un bras articulé, apte à réaliser au moins une opération d'assemblage sur une surface, au moyen d'un dispositif comportant au moins une caméra, la surface comportant une pluralité d'éléments assemblés préalablement à des coordonnées prédéterminés dites théoriques, le procédé de guidage comportant les étapes suivantes :
- capture d'au moins quatre images par la caméra selon quatre angles distincts pour au moins un élément,
- détection par traitement d'image de chaque élément sur chaque image,
- calcul par triangulation des coordonnées tridimensionnelles dites mesurées d'un élément à partir de détections réalisées pour un même élément sur au moins trois images,
- détermination des coordonnées d'au moins une opération d'assemblage en fonction des coordonnées mesurées d'au moins un élément, et
- positionnement de l'effecteur par un mouvement du bras articulé pour la réalisation d'au moins une opération d'assemblage.

Grâce à ces dispositions, on peut reconstruire les coordonnées tridimensionnelles des éléments assemblés préalablement à des coordonnées prédéterminés dites théoriques et effectuer des opérations d'assemblage sur la base des positions ainsi mesurées. Dans le cadre d'une opération de montage d'un fuselage par exemple, ces éléments pré-assemblés peuvent être des rivets positionnés manuellement préalablement à la mise en place du procédé de l'invention. La comparaison des coordonnés théoriques de position des éléments assemblés préalablement avec les coordonnées mesurées permet en outre un contrôle qualité permettant d'estimer la précision du montage effectué lors des étapes préalables.

La mise en oeuvre du procédé de selon l'invention permet une réduction de temps de cycle de capture et de détection des éléments pré-assemblés de l'ordre de cinquante pourcents.

Dans des modes de réalisation, chaque image capturée à l'étape de capture couvre une zone de la surface de dimension supérieure ou égale à 800 millimètres par 800 millimètres.

Grâce à ces dispositions, l'image capturée couvre une portion plus grande de la surface à analyser en comparaison des procédés connus de l'art antérieur qui couvrent des zones inférieures à 250 millimètres par 250 millimètres. Ainsi, le nombre de prises de vue nécessaires pour couvrir l'ensemble de la surface est moindre. De même, le nombre nécessaire d'éléments assemblés préalablement servant de points de référence est moindre.

La capture d'images couvrant une portion de la surface supérieure à 800 millimètres par 800 millimètres permet également une tolérance accrue au changement de définition des pièces. Ainsi, il ne sera pas nécessaire de changer la trajectoire de déplacement du robot pour la capture d'image suite à un repositionnement mineur d'un élément assemblé préalablement servant de point de référence.

Dans des modes de réalisation, chaque image capturée par la caméra est une image de résolution au moins supérieure à dix millions de pixels.

Grâce à ces dispositions, la caméra disposée en regard à une distance importante de la surface nécessitant les opérations de montage permet de capturer des images de sorte que la résolution de chaque rivet soit au moins supérieure à 80 pixels.

Dans des modes de réalisation, la distance entre la caméra et la surface lors de l'étape de capture est comprise entre 800 millimètres et 1000 millimètres.

Grâce à ces dispositions, le nombre d'images à capturer nécessaire pour obtenir au moins trois images pour chacun des éléments de pré-assemblage est moindre.

Ces dispositions se distinguent des solutions de l'art antérieur qui utilisent des moyens de reconnaissance optique dans lesquelles la caméra ou le capteur d'image est positionné à très courte distance de l'élément à analyser. Dans les procédés de l'art antérieur le capteur optique est disposée à une distance de l'ordre de 200mm de la surface nécessitant une opération d'assemblage et présente une focale adapté de sorte que la tête du rivet de référence emplit presque tout le champ du capteur optique.

Dans des modes de réalisation la caméra comporte en outre un polariseur et un filtre de couleur, de sorte à faciliter la détection par traitement d'image d'un élément.

Dans des modes de réalisation, le dispositif de guidage comporte une pluralité de caméras configurées pour capturer simultanément une pluralité d'images de la surface lors de l'étape de capture.

Grâce à ces dispositions, la durée de l'étape de capture d'au moins quatre images est réduite.

Selon un deuxième aspect, l'invention vise un dispositif de guidage d'un effecteur rapporté à l'extrémité d'un bras articulé et apte à réaliser au moins une opération d'assemblage, comportant au moins une caméra, et configuré pour mettre en oeuvre le procédé de l'invention.

Les buts, avantages et caractéristiques particulières de ce dispositif objet de la présente invention étant similaires à ceux du procédé objet de la présente invention, ils ne sont pas rappelés ici.

### BRÈVE DESCRIPTION DES FIGURES

D'autres avantages, buts et caractéristiques particulières de la présente invention ressortiront de la description non limitative qui suit d'au moins un mode de réalisation particulier des dispositifs et procédés objets de la présente invention, en regard des dessins annexés, dans lesquels :
- la figure 1 représente, schématiquement et en vue en perspective, un mode de réalisation particulier du dispositif de mise en oeuvre du procédé objet de l'invention,
- la figure 2 représente, sous forme de logigramme, un mode de réalisation particulier du procédé objet de l'invention,
- la figure 3 représente, schématiquement en vue en perspective, un mode de réalisation particulier de l'étape de capture d'au moins quatre images pour au moins un élément par le dispositif selon quatre angles distincts, du procédé objet de l'invention,
- la figure 4 représente, schématiquement en vue plan, un mode de réalisation particulier de l'étape de capture d'au moins quatre images pour au moins un élément par le dispositif selon quatre angles distincts du procédé objet de l'invention et
- la figure 5 représente, schématiquement et en perspective, la position théorique et la position mesurée de trois éléments pré-positionnés ainsi que les positions théoriques et mesurée de quatre opérations de perçage.

### DESCRIPTION DÉTAILLÉE DE MODES DE RÉALISATION DE L'INVENTION

La présente description est donnée à titre non limitatif, chaque caractéristique d'un mode de réalisation pouvant être combinée à toute autre caractéristique de tout autre mode de réalisation de manière avantageuse.

On note, dès à présent, que les figures ne sont pas à l'échelle.

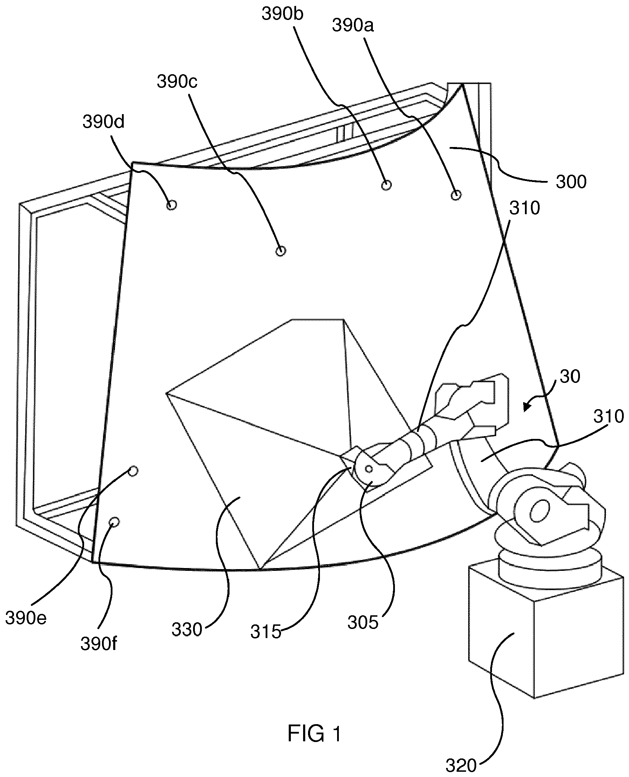

On observe, en figure 1, un mode de réalisation particulier du dispositif 30 de guidage d'un effecteur 305 rapporté à l'extrémité d'un bras articulé 310 et apte à réaliser au moins une opération d'assemblage, comportant au moins une caméra 315, configuré pour mettre en oeuvre le procédé de l'invention.

L'opération illustrée en figure 1 est une opération d'assemblage des pièces d'un aéronef. Le dispositif 30 comporte une base 320 portant un robot comportant un bras articulé 310. Le bras articulé 310 porte à son extrémité un effecteur 305. Le bras articulé 310 comporte une pluralité d'axes de rotation configurés pour déplacer l'effecteur 305 en regard de la surface 300 de sorte à le placer en toute position et selon tout angle face à la surface 300.

L'effecteur 305 comporte une caméra 315 apte à capturer des images de la surface 300. L'angle de vue de la caméra est représenté par une forme 330 pyramidale.

Préférentiellement, la caméra 315 est une caméra grand angle à haute résolution apte à capturer des images de résolution au moins supérieure à dix millions de pixels. Dans des modes de réalisation, la résolution des images capturées par la caméra 315 est de trente millions de pixels. La caméra comporte en outre un objectif, un polariseur et un filtre de couleur.

Préférentiellement, la caméra 315 positionnée à une distance de la surface 300 configurée pour obtenir une centaine de pixels pour chaque élément 390 pré-assemblés tête capturé. Ainsi, la distance entre l'effecteur 305 solidaire de la caméra 315 et la surface 300 est fixée en fonction de la distance focale de l'objectif et de la résolution des images capturées.

Ainsi, dans un exemple de réalisation, la caméra 315 porte une focale de 50mm, la résolution des images capturées est de vingt-neuf millions de pixels et la distance entre la caméra 315 et la surface 300 est comprise entre 800 mm et 1000 mm.

Préférentiellement, le dispositif comporte un moyen d'éclairage. Un exemple de moyen d'éclairage comporte deux barres de LED (acronyme en terminologie anglo-saxonne de diodes électroluminescentes) montées sur l'effecteur. Préférentiellement, le moyen d'éclairage illumine la surface à capturer le temps juste nécessaire pour réaliser la prise de vue.

L'effecteur 305 comporte en outre un outil (non représenté) apte à réaliser au moins une opération d'assemblage comme par exemple un rivetage, un perçage ou une soudure.

La surface 300 comporte une pluralité d'éléments 390 pré-assemblés. Dans le mode de réalisation illustré en figure 1 six éléments, 390a-390f, sont présents sur la surface 300. Dans le mode de réalisation illustré en figure 1, chaque élément pré-assemblé 390 est une tête rivet. Dans d'autres modes de réalisation, les éléments pré-assemblés 390 peuvent comporter au moins un des éléments suivants : un trou percé dans la surface 300, une marque réalisée à l'aide d'un marqueur, un élément autocollant ou toute marque laissée sur la surface 300 par une opération de montage préalable au procédé objet de l'invention.

Les éléments 390 ont été assemblés à des positions selon des coordonnées prédéterminées sur la surface 300 préalablement à la mise en place du procédé de la présente invention. Les coordonnées prédéterminées de chaque élément 390 sur la surface 300 sont dites théoriques, ces coordonnées sont stockées dans une base de données numérique (non représentée).

Suite au montage réalisé lors des étapes précédentes, la position réelle d'un élément 390 pré-assemblé peut différer de sa position théorique. En particulier, une étape préalable de montage manuel de rivets sur la surface 300 par un opérateur présente une marge d'erreur importante sur le placement des rivets.

Le procédé objet de l'invention met en oeuvre une pluralité de captures d'image de la surface 300 de sorte à identifier la position réelle de chaque élément 390 assemblés préalablement.

En d'autres termes, le procédé objet de l'invention comporte une opération de recalage visant à remplacer les coordonnées théoriques de chaque élément 390 pré-assemblé par ses coordonnées réelles, mesurées sur la surface 300.

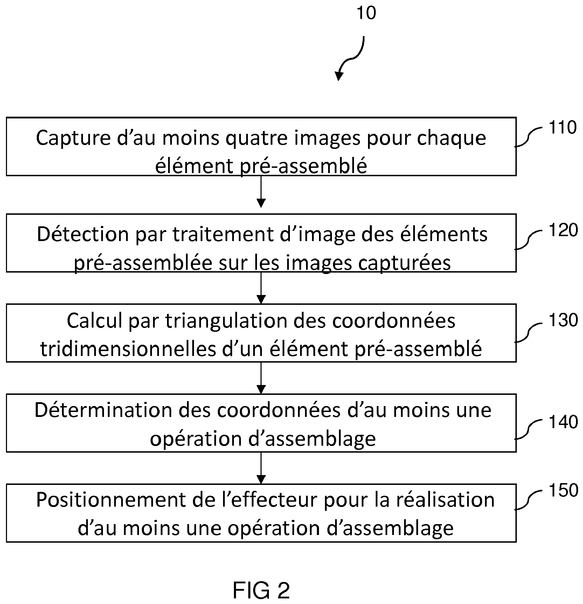

En effet, on observe en figure 2, un mode de réalisation particulier du procédé 10 de guidage d'un effecteur 305 rapporté à l'extrémité d'un bras articulé 310, apte à réaliser au moins une opération d'assemblage sur une surface 300, au moyen d'un dispositif 30, illustré en figure 1, comportant au moins une caméra 315, la surface 300 comportant une pluralité d'éléments 390 assemblés préalablement à des coordonnées prédéterminés dites théoriques, le procédé 10 comportant les étapes suivantes :
- capture 110 d'au moins quatre images par la caméra 315 selon quatre angles distincts pour au moins un élément 390,
- détection 120 par traitement d'image de chaque élément 390 sur chaque image,
- calcul 130 par triangulation des coordonnées tridimensionnelles dites mesurées d'un élément 390,
- détermination 140 des coordonnées d'au moins une opération d'assemblage en fonction des coordonnées mesurées d'au moins un élément 390, et
- positionnement 150 de l'effecteur 105 par un mouvement du bras articulé 310 pour la réalisation d'au moins une opération d'assemblage.

Préalablement à l'étape de capture 110, la préparation du dispositif 30 comporte un étalonnage de la caméra 315 et un calibrage de la caméra 315.

L'étalonnage consiste en une détermination des paramètres internes de la caméra. Cette étape comporte une pluralité de prises de vue d'une plaque de référence équipée de rivets dont la position par rapport au dispositif 30 est connue précisément, puis à un calcul des paramètres internes. Cette étape permet la correction éventuelle de la caméra pour limiter les effets de distorsion et plus généralement vérifier que la qualité des images capturée est suffisante pour la mise en place du procédé objet de l'invention.

Le calibrage consiste en une détermination de la position et de l'orientation de la caméra par rapport au dispositif 30. Cette étape comporte la capture d'une pluralité de prise de vue d'au moins une plaque de référence équipée de rivets positionnée à des endroits dont la position par rapport au dispositif 30 est connue précisément.

Lors de l'étape de capture 110, le bras articulé 310 déplace la caméra 315 successivement sur une pluralité de positions de sorte que chaque élément 390 présent sur la surface 300 soit capturé au moins quatre fois.

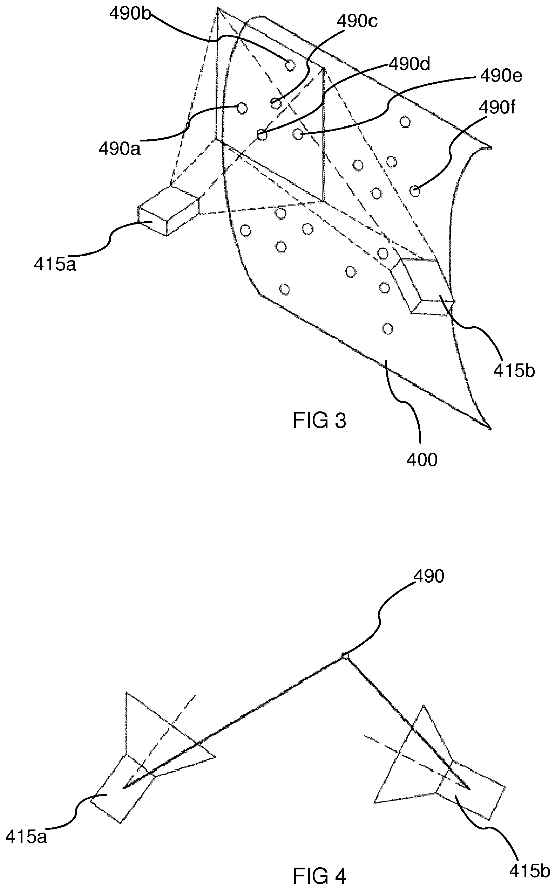

En effet, on observe en figure 3 et 4 une prise de vue d'un ensemble de rivets de pré-assemblages 490, 490a-490f sur une surface 400.

La position de la caméra 315, 415a, 415b est relevée à chaque capture d'une image par ladite caméra et enregistrée dans une mémoire. En d'autres termes, l'information relative à la position et à l'orientation de la caméra 315, 415a, 415b lors d'une capture est enregistrée dans une base de données numérique lors de chacune des captures.

Dans des modes de réalisation, le dispositif 30 de guidage comporte une pluralité de caméras 315, 415a, 415b configurées pour capturer simultanément une pluralité d'images de la surface 300, 400 lors de l'étape de capture 110.

Dans des modes de réalisation préférentiels, chaque capture d'image est réalisée sous des conditions d'éclairage contrôlées et au moyen d'une caméra comportant un polariseur et un filtre de couleur configurés pour faciliter le traitement des images lors de l'étape de détection 120.

Dans des modes de réalisation, la caméra 315 comporte en outre un polariseur et un filtre de couleur de sorte à faciliter la détection 120 par traitement d'image d'un élément 390.

Le filtre de couleur est configuré pour filtrer la lumière visible, ultraviolette ou infrarouge. Par exemple, la mise en oeuvre d'un filtre polarisant permet de réduire les effets de reflet pouvant nuire au traitement d'image. Dans d'autres modes de réalisation, on utilisera des filtres à ultra-violet.

Dans des modes de réalisation, chaque image capturée à l'étape de capture 110 couvre une zone de la surface 300 de dimension supérieure ou égale 800 millimètres par 800 millimètres.

L'ensemble des images capturées lors de l'étape 110 sont analysées lors d'une étape de détection 120 de chaque élément 390 sur chaque image par traitement d'image.

Dans un exemple de réalisation, l'étape de détection 120 sera mise en oeuvre par un contrôleur (non représenté) configuré pour mettre en oeuvre un algorithme de détection la position des éléments 390 sur chacune des images capturées.

Dans un exemple de réalisation l'étape de détection 120 permet de déterminer la position de chaque élément 390, les coordonnées obtenues sont définies selon deux dimensions dans un repère orthonormal propre à l'image analysée.

Lors d'une étape 130, les coordonnées tridimensionnelles des éléments 390 préassemblés sont déterminées par triangulation. Pour chacun des éléments pré-assemblés 390, un contrôleur (non représenté) détermine au moyen d'un algorithme de calcul les coordonnées dudit élément. Les données d'entrée dudit algorithme comportent la position d'un même élément 390 sur au moins quatre images ainsi que la position et l'orientation de la caméra lors de la capture de chacune de ces images.

Lors d'une étape de détermination 140, les coordonnées d'au moins une opération d'assemblage sont déterminées en fonction des coordonnées mesurées d'au moins un élément 390.

L'étape de détermination 140 peut également consister en une correction des coordonnées d'une position ou d'une trajectoire d'opération d'assemblage établie préalablement. Dans ce cas, l'étape de détermination 140 est un recalage.

Les coordonnées d'une opération d'assemblage peuvent être déterminées à partir des coordonnées mesurées d'un seul élément 390 de préassemblage. Dans un exemple de réalisation, les coordonnées d'une opération de perçage sont déterminées par calcul d'une distance et selon un décalage angulaire par rapport à un élément 390 de préassemblage.

Les coordonnées d'une opération d'assemblage peuvent être déterminées à partir des coordonnées mesurées d'une pluralité d'éléments 390 de préassemblage. Dans un exemple de réalisation, les coordonnées d'une opération de perçage sont positionnées sur la droite reliant deux éléments 390.

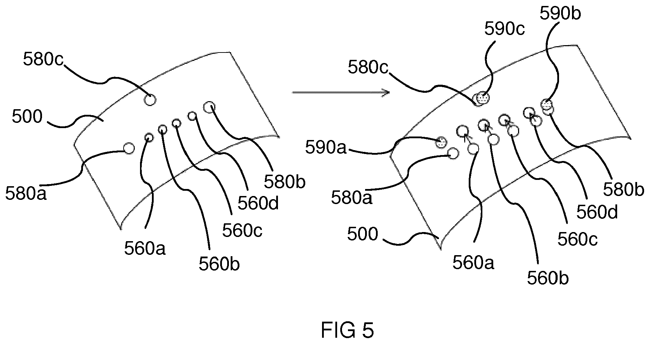

En effet, on observe en figure 5, le recalage d'une opération d'assemblage sur la surface 500. L'opération d'assemblage comporte quatre positions de perçage 560a-560c espacées uniformément sur une ligne reliant les positions théoriques 580a, 580b des rivets assemblés préalablement.

Au moyen du procédé de l'invention, les positions 590a, 590b dites réelles des rivets de pré-assemblage sont calculées. Ensuite, lors d'une étape de détermination 140, les positions de perçages 560a-560c sont calculées pour être espacées uniformément sur une ligne reliant les positions dites réelles des rivets de pré-assemblage 590a, 590b, 590c.

Lors d'une étape de positionnement 150, l'effecteur 105 est positionné par un mouvement du bras articulé 310 pour la réalisation d'au moins une opération d'assemblage.

Dans des modes de réalisation, l'opération d'assemblage comporte au moins un perçage, un rivetage ou une soudure.

## Revendications

1. Procédé (10) de guidage d'un effecteur (305) situé à l'extrémité d'un bras articulé (310), apte à réaliser au moins une opération d'assemblage sur une surface (300), au moyen d'un dispositif (30) comportant au moins une caméra (315), la surface (300) comportant une pluralité d'éléments (390) assemblés préalablement à des coordonnées prédéterminées dites théoriques,
**caractérisé en ce qu'**il comporte les étapes suivantes :
- capture (110) d'au moins quatre images par la caméra (315) selon quatre angles distincts pour au moins un élément (390),
- détection (120) par traitement d'image de chaque élément (390) sur chaque image,
- calcul (130) par triangulation des coordonnées tridimensionnelles dites mesurées d'un élément (390) à partir de détections réalisées pour un même élément (390) sur au moins trois images,
- détermination (140) des coordonnées d'au moins une opération d'assemblage en fonction des coordonnées mesurées d'au moins un élément (390), et
- positionnement (150) de l'effecteur (105) par un mouvement du bras articulé (310) pour la réalisation d'au moins une opération d'assemblage.

2. Procédé (10) de guidage d'un effecteur (305) selon l'une des revendications précédentes, dans lequel chaque image capturée à l'étape de capture (110) couvre une zone de la surface (300) de dimension supérieure ou égale 800 millimètres par 800 millimètres.

3. Procédé (10) de guidage d'un effecteur (305) selon l'une des revendications précédentes, dans lequel chaque image capturée par la caméra (315) est une image de résolution au moins supérieure à dix millions de pixels.

4. Procédé (10) de guidage d'un effecteur (305) selon l'une des revendications précédentes, dans lequel la distance entre la caméra (315) et la surface (300) lors de l'étape de capture est comprise entre 800 millimètres et 1000 millimètres.

5. Procédé (10) de guidage d'un effecteur (305) selon l'une des revendications précédentes, dans lequel la caméra (315) comporte en outre un polariseur et un filtre de couleur de sorte à faciliter la détection (120) par traitement d'image d'un élément (390).

6. Procédé (10) de guidage d'un effecteur (305) selon l'une des revendications précédentes, dans lequel le dispositif (30) de guidage comporte une pluralité de caméras (315) configurées pour capturer simultanément une pluralité d'images de la surface (300) lors de l'étape de capture (110).

7. Dispositif (30) de guidage d'un effecteur (305) rapporté à l'extrémité d'un bras articulé (310) et apte à réaliser au moins une opération d'assemblage, comportant au moins une caméra (315), **caractérisé en ce qu'**il est configuré pour mettre en oeuvre le procédé selon l'une quelconque des revendications 1 à 6.
